# EUROPEAN PATENT APPLICATION

(11) **EP 1 306 004 A2**
(43) Date of publication of application: **02.05.2003**
(21) Application number: 02257395.0
(22) Date of filing: 24.10.2002
(51) Int. Cl.: A01G 9/10

(54) **Seedling pot**

(30) Priority: 24.10.2001 JP 2001325909
(71) Applicant: Nippon Paper Industries Co., Ltd., Tokyo 114-0002 (JP)
(72) Inventor: Narishima, Tomofumi c/o Res. Lab. of Product, Kita-ku Tokyo 114-0002 (JP); Yashiro, Makoto c/o Res. Lab. of Product, Kita-ku Tokyo 114-0002 (JP)
(74) Representative: Wilson Gunn Gee

(57) **Abstract**

A seedling pot which uses a laminated sheet having a thermoplastic resin layer with waterproofing properties on at least one surface of a paper base material, and molded so that the inner surface is the thermoplastic resin layer is disclosed. The pot is designed so that the cross-sectional permeability of the paper base material is 100 mg/cm² or less, and the product of the "load acting on the base/base circumference" and "leg height" is within the range of 3-25 g.

## Description

### FIELD OF THE INVENTION

This invention relates to a paper seedling pot in the form of a paper cup, and in particular to a seedling pot wherein the pot base legs do not easily buckle even when the pot is frequently watered or it is exposed to rainwater, which maintains its original shape, and which has excellent shape-retaining properties.

### BACKGROUND OF THE INVENTION

In the prior art, due to their low-cost and durability, plastic pots (polypots) manufactured from a polyolefin resin such as polyethylene or propylene, were generally used as seedling pots in vegetable or flower gardens. After the seedlings were grown, the pots were disposed of by burying them or incinerating them. However, if they were buried they had no biodegradability, and remained in the earth permanently which limited the uses to which the ground could be put. If they were incinerated, the combustion temperature rose to high levels which tended to damage the furnace.

As a means of resolving this problem, pulp molded pots or biodegradable resin pots which make use of the biodegradability of the pot material are now on the market. However, in the former case, pot manufacture is not very efficient, and a large amount of energy is required to produce them. In the latter case, the resin is costly. Both types of pots are therefore costly, and they have not made much inroads into the market.

The Inventors have already developed a seedling pot paper (Japanese Patent Application Public Disclosure No.2000-41500 (Koho)) and seedling pot (Japanese Patent Application No. 2000-296691, Japanese Patent Application No. 2000-296692). After the seedlings are grown, these seedling pots can be incinerated as paper, and if a biodegradable resin is used, the seedlings in each pot can be transplanted into the soil without any waste disposal concerns.

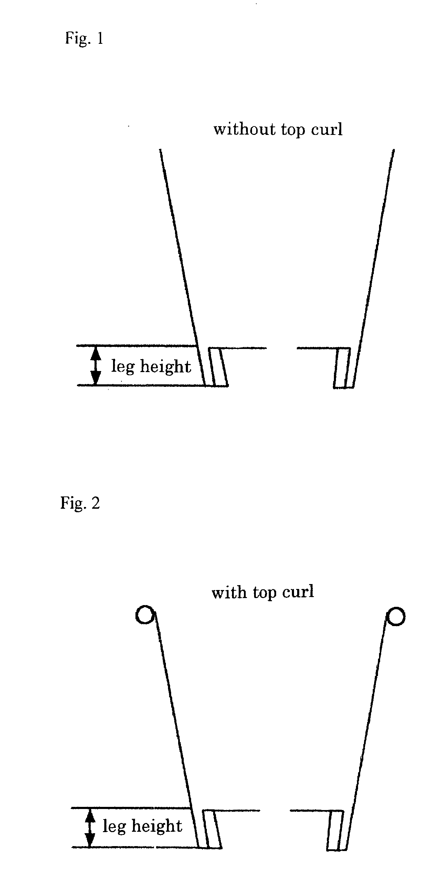

Normally, as shown in Fig. 1, a seedling pot has parts referred to as legs on the base in order to improve air circulation and water drainage. However, in the case of a paper seedling pot, when the pot is watered during the growth of seedlings or rainwater accumulates during the growth of the seedlings if the pots are left outside, the base legs buckled and broke off. For this reason, this type of pot has not come into common use. In general, the seedling growth period for the flower or vegetable pots generally sold in shops, which are the most common type of seedling pots, is from 1 month to 1 1/2 months, and as they may stay on the shelf for as long as 1/2 month, the seedling pot must retain its original shape during this time.

### SUMMARY OF THE INVENTION

The inventors carried out intensive studies on seedling pots which not only caused no environmental damage due to waste disposal, but also had a suitable lifetime. As a result, they found that satisfactory results were obtained with a seedling pot using a laminated sheet having a thermoplastic resin layer with waterproofing properties on at least one surface of a paper base material, and molded so that the inner surface is the thermoplastic resin layer, the cross-sectional permeability of the paper base material being 100 mg/cm² or less, and the product of the "load acting on the base/base circumference" and "leg height" being within certain limits. This led to the present invention.

It is therefore an object of this invention to provide a seedling pot whereof the base legs do not buckle and which retains its original shape even when the pot is watered during the growth of seedlings, or rainwater accumulates during the growth of seedlings when the pot is left outside.

In order that the invention may be more clearly understood, embodiments thereof will now be described by way of example with reference to the accompanying drawings of which:
Fig. 1 is a schematic cross-sectional view of the seedling pot of this invention without top curl; and
Fig. 2 is a schematic cross-sectional view of the seedling pot of this invention with top curl.

### DETAILED DESCRIPTION OF THE INVENTION

The above object is attained by a seedling pot using a laminated sheet having a thermoplastic resin layer with waterproofing properties on at least one surface of a paper base material, and molded so that the inner surface is the thermoplastic resin layer, the cross-sectional permeability of the paper base material being 100 mg/cm² or less, and the product of the "load acting on the base/base circumference" and "leg height" being within the range of 3-25 g.

The seedling pot of this invention has a shape wherein the pot base has legs as shown in Fig. 1. The full weight of the earth in the pot acts on the legs of the pot base, and the legs will buckle when they can no longer support this weight. Therefore, according to this invention, the pot volume, base circumference and leg height are designed so that the value of the product of the "load acting on the pot base/base circumference" and "leg height" is within the range of 3-25 g. When the above value is less than 3 g, the leg height is lower so the legs do not easily buckle, but as the surface area of the heat seal between the base paper on the base and the paper of the body is then smaller, the strength of the heat seal falls, and the base tends to fall out easily when the pot is moved due to the weight of the load of earth in it. It is also preferred for molding that the height of the legs is 2mm or more. If it is less than 2mm, the molding process yield falls considerably, which is undesirable. If the above value exceeds 25 g, the leg height increases so that the legs buckle easily. The load acting on the pot base is found by calculating the pot volume, and performing a conversion by taking the specific gravity of the contents as 1. In the case of a 9 cm diameter pot which is a seedling pot of standard diameter, when the value of the product of the "load acting on base/base circumference" and "leg height" is 3 g, the leg height is 1.7 mm, and when it is 25 g, the leg height is 14.5 mm.

The paper base material used for the seedling pot of this invention must have a cross-sectional permeability of 100 mg/cm² or less. When the cross-sectional permeability exceeds 100 mg/cm², water penetrates easily from the cross-section of the heat seal part of the base, so the legs of the base soften and buckle easily. The above cross-sectional permeability is found by affixing a polyester adhesive tape of thickness 25 micrometers to both sides of the paper base material, immersing a 4 cm square test piece in water at 23°C and calculating the amount of water which penetrates from the four corners. This was expressed as the amount of water absorbed per unit cross-sectional surface area found from the paper thickness which was previously measured in terms of mg/cm².

It is further preferred that the weighting of the paper base material used in this invention is within the range of 150-400 g/m². If it is less than 150 g/m², the rigidity of the base material is insufficient, the pot is difficult to handle and the legs also buckle easily. If on the other hand it exceeds 400 g/m², the rigidity is too high, so molding becomes difficult and molding efficiency falls considerably.

To the extent that it does not affect the cross-sectional permeability, the proportion of machine pulp or chemical pulp in the paper base material may be changed, or various chemicals may be added internally as may be convenient such as fixing agents, sizing agents, paper strength enhancing agents, dyes, pigments or antifungal agents depending on seedling growth periods or the season. Likewise, surface sizing agents, paper strength enhancing agents and antifungal agents may be applied externally by a coating device such as a size press coater, gate roll coater, blade coater or air knife coater.

The body and the base of the seedling pot of this invention are formed from a laminated sheet having a thermoplastic resin layer with waterproofing properties on a paper base material, the outer surface being the paper base material and the inner surface being thermoplastic resin layer with waterproofing properties. The paper base material has a high rigidity and maintains a pot shape, while the thermoplastic resin layer with waterproofing properties prevents water entering the paper from the soil in the pot and confers moldability due to the heat seal. When stronger waterproofing properties are desired, the thermoplastic resin layer may be formed on both surfaces of the paper base material.

The thermoplastic resin layer with waterproofing properties used as the inner surface of the seedling pot of this invention may be any common thermoplastic synthetic resin such as a polyolefin resin, polyester resin or acrylic resin, these being used alone or two or more used in combination.

When seedlings are transplanted in their pots after growth is complete, it is desirable that the pot degrades in the earth, so it is preferred to use a biodegradable thermoplastic resin. Preferred examples of thermoplastic, biodegradable resins with waterproofing properties which can be used as the inner surface of the seedling pot of this invention are polyhydroxybutyrate, polylactic acid, polycaprolactone, polybutylene succinate, polybutylene succinate/adipate, polybutylene succinate/carbonate, polyethylene succinate, polyvinyl alcohol, modified starch, cellulose acetate and chitosan/cellulose/starch, these being used alone or two or more used in combination.

It is preferred that the temperature at which the heat seal of the thermoplastic resin is formed, is within the range of 140°C to 350°C. If the heat seal temperature of the resin is less than 140°C, blocking easily occurs between the resin surface and paper surface or between resin surfaces when the paper is stored as rolls or in stacks of sheets. This causes a marked decrease of productivity, which is undesirable. If on the other hand the heat seal temperature exceeds 350°C, the paper may become discolored by heat or the paper strength may fall, which again is undesirable.

In the laminated sheet of this invention, it is preferred that the weight ratio of the paper base material and the thermoplastic synthetic resin layer with waterproofing properties is within the range of 70/30-95/5. At a resin proportion exceeding 30 percent, waterproofing properties and heat seal properties do not change even if more resin is added, so this only increases the cost. On the other hand, at a resin proportion of less than 5 percent, the resin film becomes thinner, so waterproofing properties and heat seal properties decrease which is undesirable.

There is no particular limitation on the method of laminating the thermoplastic synthetic resin layer on the paper base material, any of the common methods being employed such as "extrusion lamination" wherein the resin is made into a film by an extrusion device and laminated on the paper base material, "heat lamination" wherein a resin film which was previously prepared is pressed onto the paper base material by a heated roller, "dry lamination" or "wet lamination" wherein an adhesive or sticker is applied to one surface of the paper base material or resin film and lamination is performed, or dissolving or dispersing the resin in a solvent, coating it on the paper base material and drying it.

The pot may be molded and produced in a paper pot molder generally used for this purpose. Using laminated paper wherein the thermoplastic resin is laminated on both surfaces or one surface (inside of pot is resin surface), it is possible to manufacture a pot with no top curl having a water drainage hole in the base as shown in Fig. 1, or a pot with a top curl as shown in Fig. 2.

### EXAMPLES

This invention will now be described in more detail referring to specific examples, but it should be understood that the invention is not to be construed as being limited thereby.

### EXAMPLE 1

Low density polyethlene of thickness 20 micrometers (Commercial name: Petrosen 213, Toso Co. Ltd.) was extruded at a die temperature of 320°C and laminated respectively on both surfaces of a waterproof-lined raw paper having a cross-sectional permeability of 50 mg/cm² and a weighting of 200 g/m². Using this laminated paper, a seedling pot having an upper circumference of diameter of 9 cm, base circumference of 17.4 cm and whereof the value of the product of "load action on base/base circumference" and "leg height" was 10 g (leg heaight 5.8 mm) as shown in Fig. 2, was molded.

This pot was filled with compost, let at a room temperature of 25°C and watered once a day. The weight of compost immediately after watering was 300±20g.

Even after two months had passed, the pot legs did not buckle, and the original shape was maintained.

### COMPARATIVE EXAMPLE 1

A seedling pot was molded and a buckling test performed in an identical way to that of Example 1, except that a lined raw paper was used having a cross-sectional permeability of 150 mg/cm², and a weighting of 200 g/m². As a result, the pot legs buckled at the third week.

### COMPARATIVE EXAMPLE 2

A seedling pot was molded and a buckling test performed in an identical way to that of Example 1, except that the value of the product of "load acting on base/base circumference" and " leg height" was 30 g (leg height 17.3 mm). As a result, the pot legs buckled at the fourth week.

### COMPARATIVE EXAMPLE 3

A seedling pot was molded in an identical way to that of Example 1, except that the value of the product of "load acting on base/base circumference" and " leg height" was 2 g (leg height 1.1 mm). In the case of this example, when the pot was molded, there were ten times as many heat seal defects in the base as in Example 1, the base paper and body paper peeled away when seedlings were grown, and a buckling test could not be performed.

## Claims

1. A seedling pot using a laminated sheet having a thermoplastic resin layer with waterproofing properties on at least one surface of a paper base material, and molded so that the inner surface is the thermoplastic resin layer, the cross-sectional permeability of said paper base material being 100 mg/cm² or less, and the product of the "load acting on the base/base circumference" and "leg height" lying within the range 3-25 g.

2. The seeding pot according to Claim 1, wherein the "leg height" is more than 2 mm.

3. The seedling pot according to Claim 1 or 2, wherein said laminated sheet is a laminated sheet whereof the weight ratio between the paper base material and the thermoplastic resin layer having waterproofing properties is 70/30-95/5.

4. The seeding pot according to any preceding claim, wherein the weight of said paper base material is 150-400 g/m².

5. The seeding pot according to any preceding claim, wherein said thermoplastic resin is the one whose heat seal temperature is 140°C-350°C.

6. The seeding pot according to Claim 5, wherein said thermoplastic resin is at least one selected from the group consisting of polyhydroxybutyrate, polylactic acid, polycaprolactone, polybutylene succinate, polybutylene succinate/adipate, polybutylene succinate/carbonate, polyethylene succinate, polyvinyl alcohol, modified starch, cellulose acetate and chitosan/cellulose/starch.
